# EUROPEAN PATENT SPECIFICATION

(11) **EP 0 992 019 B1**
(45) Date of publication and mention of the grant of the patent: **22.11.2006**
(21) Application number: 98930923.2
(22) Date of filing: 22.06.1998
(51) Int. Cl.: G06K 19/06, G11B 5/70, G11B 5/852

(54) **A MAGNETIC RECORDING MEDIUM**
MAGNETISCHES AUFZEICHNUNGSMEDIUM
SUPPORT D'ENREGISTREMENT MAGNETIQUE

(30) Priority: 28.06.1997 GB 9713592
(43) Date of publication of application: 12.04.2000
(73) Proprietor: TSSI Systems Limited, London W15 4LY (GB)
(72) Inventor: BUSSELL, Simon, Jason, Swindon, Wiltshire SN5 9AE (GB)
(74) Representative: Sharp, Alan Cooper
(86) International application number: PCT/GB1998/001829
(87) International publication number: WO 1999/000766

(56) References cited:
- US-A- 3 986 205
- US-A- 4 197 989
- US-A- 4 281 043

## Description

This invention relates to a magnetic recording medium comprising a layer of material including permanently aligned acicular magnetic particles having a given coercivity. This invention also relates to methods of making such a magnetic recording medium.

A known magnetic recording medium of this type is described in GB-B-1 331 604, in which acicular particles of γ - Fe₂O₃ (having a coercivity of perhaps 27 kA/m) are fixedly aligned in predetermined directions in selected spaced regions of the layer, the regions in between either being randomly aligned or being aligned in a different direction. This type of magnetic recording medium is manufactured in the form of a tape by Thorn Secure Science International Limited under the Trade Mark "WATERMARK" tape.

"WATERMARK" tape provides high security because the permanently recorded data is difficult to counterfeit, and gives the option to write ordinary data on the magnetic stripe compatible with ISO standard low coercivity (LoCo) bank cards.

In recent years there has been a growth in the use of high coercivity (HiCo) magnetic records, for example as tape on credit or bank cards or other documents of value. Such material typically has a coercivity of above about 1200 Oe (i.e. 100 kA/m) and is described more fully in the standards document ISO 7811/6. Such HiCo magnetic records offer better resistance to erasure than LoCo materials, but do not offer the high security possible with "WATERMARK" tape.

A combination of the two technologies would offer both security and resistance to accidental erasure, but attempts to combine the two materials have up until now been unsuccessful. Such attempts have included tracks manufactured side by side or laminated one on top of the other.

According to the present invention there is provided a magnetic recording medium as specified in claims 1 - 5.

This magnetic recording medium combines LoCo and HiCo technologies without the problems associated with aligning different materials side by side, or the difficulty of reading one layer through the other. The medium can be used simultaneously to record data permanently by means of the acicular particles and erasably by means of the particles having the further coercivity. The medium enables the permanent data to be read in the presence of soft encoded HiCo data using existing equipment.

The present invention also enables hand held reader units to be used without problems caused by the active head of the "Watermark" data reader erasing soft encoded data on neighbouring tracks of tape having only LoCo particles. This is a problem because of the inability precisely to align hand held readers with the correct tape track reliably in use.

Preferably, the volume percent of particles having said first coercivity is less than the volume percent of particles having said further coercivity. This enables the medium to conform to standards document ISO 7811/6 by reducing the distortion produced by crosstalk between the two types of record.

According to a second aspect of the invention there is provided a docuiment of value as specified in claim 6.

According to a third aspect of the invention there is provided a method of making a magnetic recording medium, as specified in claims 7 - 9.

The invention relates particularly, though not exclusively, to magnetic records for credit or bank cards or other documents of value.

Embodiments of the invention will now be described, by way of example only, with reference to the accompanying diagrammatic drawings, in which :-
Figure 1 shows a flow diagram of a method according to the invention,
Figure 2 shows a flow diagram of a second method according to the invention,
Figure 3 shows a plan view of a layer of a magnetic recording medium having HiCo particles,
Figure 4 shows an oblique view of the medium of Figure 3,
Figure 5 shows a plan view of a layer of a magnetic recording medium according to the invention,
Figure 6 shows the layer of Figure 5 having a permanently aligned structure,
Figure 7 shows a theoretical hysteresis curve for a magnetic recording medium according to the invention, and
Figure 8 shows a measured hysteresis curve for a magnetic recording medium according to the present invention.

A magnetic recording medium having a mixture of hexagonal platelets and acicular particles is disclosed in US 4,657,813. However, in this prior art document the alignment is performed after the slurry has been solidified, so the acicular particles do not have a permanently oriented structure.

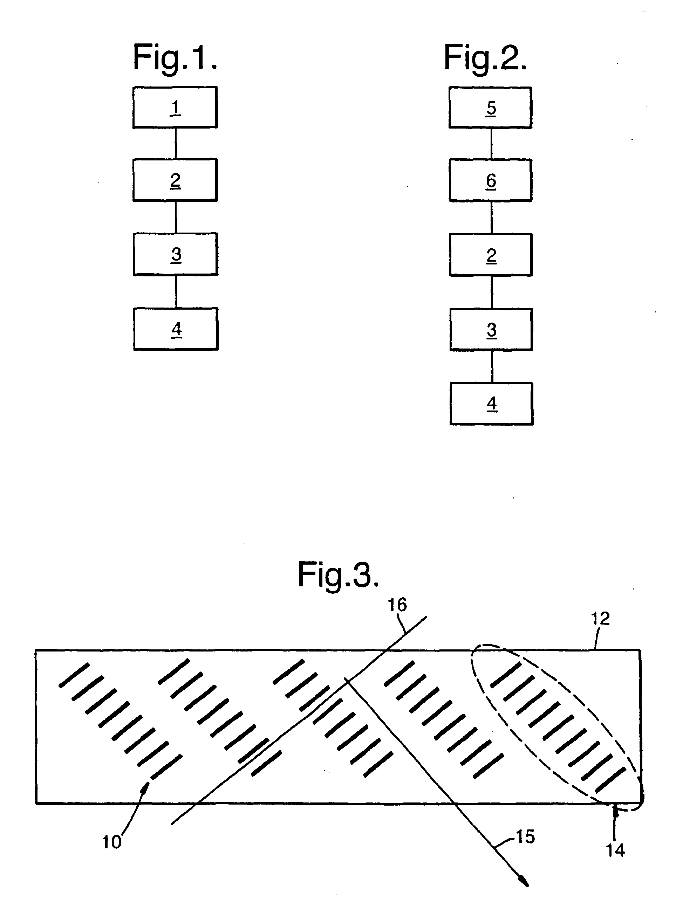

Figure 1 shows a flow diagram of a method of making a magnetic recording medium. The numbered blocks in the diagram have the following significances.

Block 1 of Figure 1 denotes preparing a slurry including acicular magnetic particles having a first coercivity and non-acicular magnetic particles having a further coercivity larger than the first coercivity. A number of examples of how to produce a slurry in accordance with the present invention are described below.

### EXAMPLE 1

In the present example the slurry is prepared in the following way. Powdered γ - Fe₂O₃ in the form of agglomerates of acicular individual grains is dispersed into a liquid mixture of a binder and a solvent using a stirring apparatus which provides significant shear forces. This mixture is then fed into a bead mill and milled to separate the individual grains to form a slurry. In this first example the exact slurry composition used has a solids content of 56% and the solvent used is a mixture of toluene and methyl ethyl ketone. The composition of the solids is as follows (in weight %):- polyester resin 7.1%, polyurethane resin 6.2%, phosphate surfactant 0.6%, de-oiled lecithin 0.6%, carbon black 1.3%, γ - Fe₂O₃ 31.1%, barium ferrite 50.2%, lubricant 1.5% and melamine curing agent 1.3%.

Care needs to be taken during preparation of the slurry as the LoCo particles (γ - Fe₂O₃) and the HiCo particles (barium ferrite) have different properties. The barium ferrite particles obtained in powdered form are smaller than the LoCo particles and have a lower oil adsorption, thus making them far easier to disperse than the LoCo particles. If both magnetic pigments were loaded into the bead mill at the same time the barium ferrite would be overmilled and the dispersion would become unstable. In particular, the HiCo particles will tend to come out of suspension, leading to changes in the viscosity of the slurry and hence the quality of the coating and quality of the subsequent watermarking.

Three possible methods of overcoming this problem are
a) to make two separate dispersions and mix them afterwards,
b) add the HiCo particles very late in the milling process, or
c) to stir the HiCo particles directly into the slurry.

The latter technique is especially advantageous if strontium ferrite is the HiCo material. Other HiCo materials such as Platinum - Cobalt or Silmanol may be used alternatively or in addition.

The preferred ranges employed for the above listed ingredients in the present embodiment are as follows:-
polyester resin 4 - 20%,
polyurethane resin 4 - 20%,
phosphate surfactant 0 - 2%,
de-oiled lecithin 0 - 2%,
carbon 0.5 - 6%,
alumina 0 - 5%
silica 0 - 5%
γ-Fe₂O₃20-80%,
barium ferrite 20 - 80%,
isocyanate or melamine curing agent 0 - 5%.
lubricant (e.g. silicone or PTFE oil) 0 - 3%

Suitable solvents include one or more of the group including toluene, methyl ethyl ketone and methyl iso-butyl ketone.

The volume ratio of LoCo particles to HiCo particles is preferably between 3.4:6.6 and 5.5:4.5. Pigment volume content is typically between 50 and 55%, and the preferred solid content is between 40 and 60%.

It should be noted that in this example the pigment loading is far higher than that normally used for standard tape. The pigment loading levels are chosen such that the LoCo watermark of the subsequent tape is readable, and the HiCo record can pass the "window" test of standards document ISO /IEC 7811-6. The standard does not specify a minimum coercivity for the tape, but is difficult to pass unless the finished tape has a coercivity of above about 1200 Oe (i.e. 100 kA/m). Tape made using the slurry described above typically has a coercivity approximately equal to or greater than 1500 Oe (125 kA/m).

### EXAMPLE 2

As a further example of a way of producing a slurry as described above, the following formulation is used to make up two separate slurries (denoted part A and part B) which are subsequently mixed in equal portions by weight to produce the final mixture.

### PART A

strontium ferrite 92.6 wt%
functionalised vinyl resin 7.4 wt%
prepared as a slurry having a solid content of 40% in a solvent as above.

### PART B

modified PVC resin 5.7 wt%
polyurethane resin 14.4 wt%
phosphate surfactant 1.4 wt%
de-oiled lecithin 1.4 wt%
carbon black 3.0 wt%
γ-Fe₂O₃ 71.8 wt%
lubricant (e.g. silicone or PTFE oil) 2.3 wt%
prepared as a slurry having a solid content of 40% in a solvent as above.

### EXAMPLE 3

Formulations in the following ranges may also be used to prepare a slurry for use in the present invention:-
functionalised vinyl co-polymer 0.6 - 20 wt%
γ ferric oxide 20 - 80 wt%
carbon 0.5 - 6%
alumina 0 - 5%
silica 0 - 5%
polyester resin 5 - 20%
polyurethane resin 5 - 20%
strontium or barium ferrite 20 - 80%
isocyanate or other curing agent 0 - 5%
lubricant (e.g. silicone or PTFE oil) 0 - 3%.

The volume ratio of LoCo particles to HiCo particles is preferably between 34:66 and 55:45. Pigment volume content is typically between 50 and 55%, and the preferred solid content is between 40 and 60%. Suitable solvents include one or more of the group including toluene, methyl ethyl ketone and methyl iso-butyl ketone.

Once the slurry has been prepared according to one of the above recipes it is coated onto a flexible substrate to form a layer. This step is denoted by block 2 in Figure 1. The flexible substrate may comprise, for example, a polyester film as used in magnetic tape manufacture, a sheet of paper or card, or a sheet of plastics material. In the present example polyester film is employed as a substrate, and the rest of the fabrication process is similar to the manufacture of "WATERMARK" tape as described in, for example, GB-B-1 331 604. However, in the present example the thickness of the layer is preferably controlled to have a constant value in the range between 15 and 30 micrometers. This enables the finished tape or card to pass the criteria established in the standards document ISO/IEC 7811 - 6.

Once the layer has been formed on the substrate, the acicular LoCo particles (γ ferric oxide particles in the present example) are aligned in the usual way (as described in GB-B-1 331 604) to form selected spaced regions in which the LoCo particles are aligned along a predetermined direction, and the LoCo particles in the remainder of the layer are either not so aligned or are aligned along a substantially different direction. This is denoted by block 3 in Figure 1.

The fluid layer is then solidified in the usual way (as described in GB -B-1331604) so that the alignment of all the magnetic particles becomes fixed. This is denoted by block 4 in Figure 1.

Figure 2 also shows a flow diagram of a method of making a magnetic recording medium in accordance with the present invention. Blocks 2 - 4 have the same significance as in Figure 1, but additional blocks 5 and 6 have replaced block 1. In this diagram block 5 denotes preparing a slurry including acicular magnetic particles having a first coercivity, whilst block 6 denotes adding non-acicular magnetic particles having a further coercivity higher than the first coercivity to the slurry.

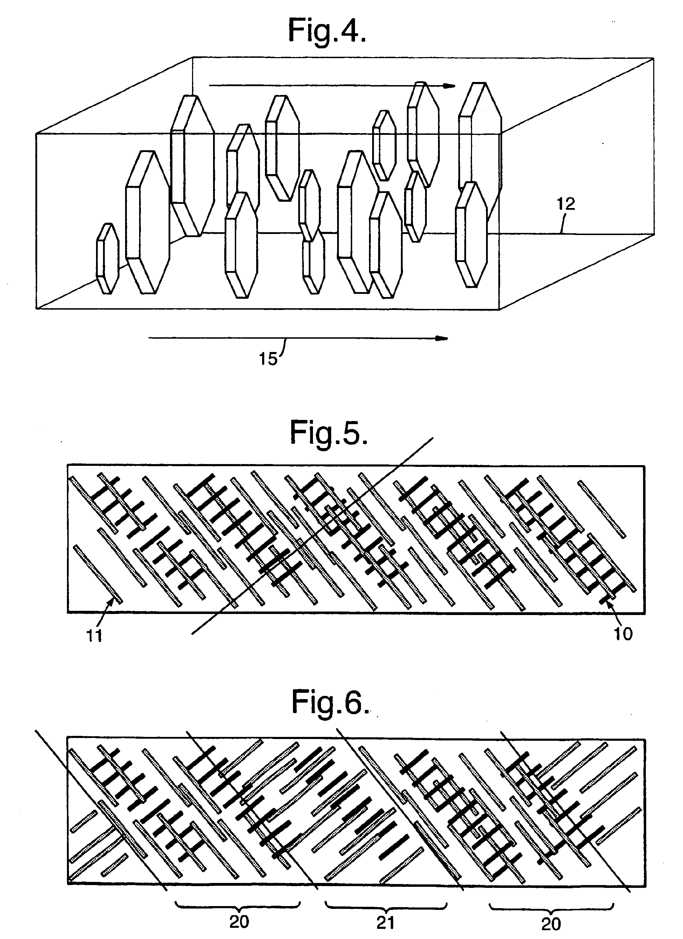

Figure 4 shows a cross section of what the layer looks like in cross-section after the initial alignment. The barium ferrite particles (10) are normally in the form of hexagonal platelets, having an easy axis of orientation (15) normal to the plane of the platelet. The acicular particles are not shown in this Figure to improve clarity. They are shown however in Figures 5 and 6. The barium ferrite particles in the layer form columns (14) as shown in plan view in Figure 3, the columns having being oriented parallel to one another, the axes of the generally cylindrical columns corresponding to an easy axis of orientation (15) normal to the axis of the orienting magnetic field (16). Each column resembles a stack of coins arranged with the surface of each coin substantially normal to the surface of the substrate.

The ferric oxide particles (11) are generally elongate or acicular, having magnetic properties which have a single axis of symmetry along the long axis of the particle. The thickness of the layer in this example is 22 micrometers, and in this example it is carried by a flexible polyester substrate (12). Figure 5 shows a plan view of the layer after its initial orientation step which aligns all the particles in the way shown with the axes of the acicular particles substantially orthogonal to the axes of the columns of platelets. This initial orientation is performed using a magnetic field of the order of 100 - 350 milliTesla to ensure both the HiCo and LoCo particles are aligned.

Figure 6 shows the same layer having been given a further alignment to form regions 20 and 21 having different magnetic properties from one another, thereby forming a permanently aligned structure after solidification which can be used to store data which cannot subsequently be erased. In this further alignment (in which the alignment of the acicular magnetic particles only is changed in spaced regions 21) a magnetic field of only 8 - 20 milliTesla is employed so that the HiCo particles are not realigned to the same extent as the LoCo particles.

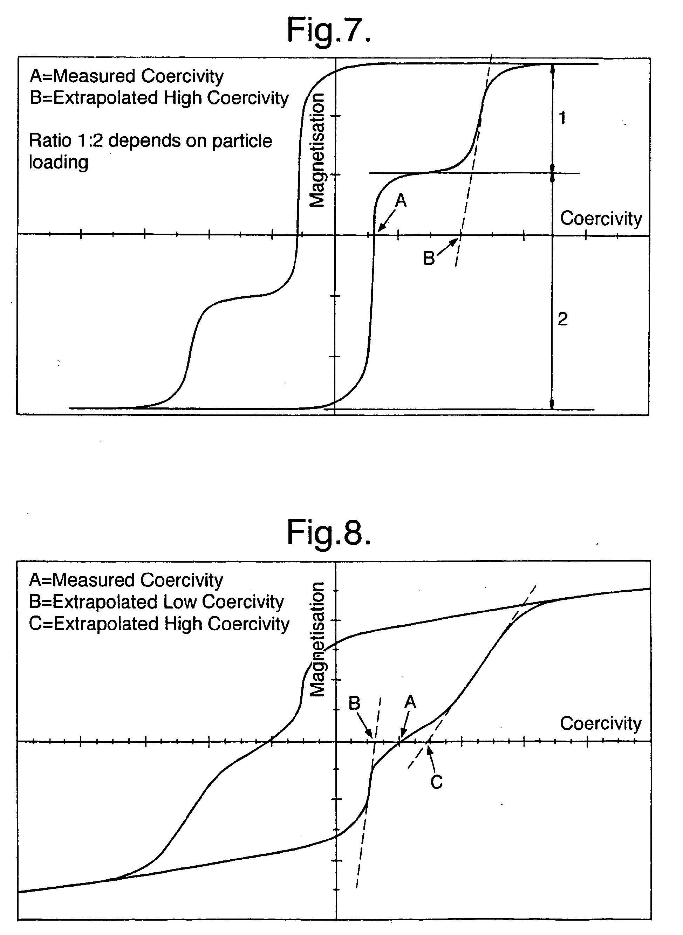

Figure 8 shows a typical hysteresis curve for a magnetic recording medium made according to example 1 above. Typical values of coercivity are between 1200 and 4000 Oe (125 to 340 kA/m), preferably between 1500 and 2500 Oe, the saturation magnetisation is typically 0.5 to 0.9 emu, and the remanence is of the order of 0.3 to 0.7 emu. A theoretical prediction of what the hysteresis curve should look like is shown in Figure 7.

The tape made according to the foregoing instructions may optionally have a lacquer overcoat applied to provide protection to the surface during use.

An unsupported layer may be produced by peeling away the flexible substrate. This process will be easier if a release layer has been provided between the layer and the substrate during manufacture.

## Claims

1. A magnetic recording medium comprising a layer of material including permanently aligned acicular magnetic particles having a first coercivity, the layer including non-acicular magnetic particles having a further coercivity higher than the first **characterised in that** data is recorded permanently by means of the alignment of the acicular particles to form selected spaced regions in which the acicular particles are aligned along a predetermined direction, the non-acicular magnetic particles not being so aligned and being capable of recording data erasably.

2. A magnetic recording medium as claimed in claim 1 in which the non-acicular magnetic particles having said further coercivity are platelets.

3. A magnetic recording medium as claimed in any preceding claim, in which the ratio of the volume percent of particles having said first coercivity to the volume percent of particles having said further coercivity is between 34:66 and 55:45.

4. A magnetic recording medium as claimed in any preceding claim in which the particles having said further coercivity comprise one or more of the group of materials including barium ferrite, strontium ferrite, Platinum - Cobalt and Silmanol.

5. A magnetic recording medium as claimed in any preceding claim in which the layer is carried by a flexible substrate.

6. A document of value carrying a magnetic recording medium as claimed in any preceding claim.

7. A method of making a magnetic recording medium, including:
a) preparing a slurry including acicular magnetic particles having a first coercivity and non-acicular magnetic particles having a further coercivity higher than the first coercivity,
b) coating the slurry onto a flexible substrate to form a layer,
c) aligning all the magnetic particles,
d) aligning only the acicular magnetic particles in spaced regions of said layer along a predetermined direction, and
e) solidifying said layer.

8. A method of making a magnetic recording medium, including:
a) preparing a slurry including acicular magnetic particles having a first coercivity,
b) adding non-acicular magnetic particles having a further coercivity higher than the first coercivity to the slurry,
c) coating the slurry onto a flexible substrate to form a layer,
d) aligning all the magnetic particles,
e) aligning only the acicular magnetic particles in spaced regions of said layer along a predetermined direction, and
f) solidifying said layer.

9. A method of making a magnetic recording medium as claimed in claim 7 or claim 8 in which the volume percent of particles having said first coercivity and the volume percent of particles having said further coercivity in the slurry are in a ratio between 34:66 and 55:45.

## Patentansprüche

1. Magnetaufzeichnungsträger mit einer Schicht eines Materials beinhaltend permanent ausgerichtete nadelförmige Magnetpartikel mit einer ersten Koerzitivkraft, wobei die Schicht nicht nadelförmige Magnetpartikel mit einer weiteren Koerzitivkraft umfasst, welche höher ist als die erste Kraft, **dadurch gekennzeichnet, dass** mithilfe der Ausrichtung der nadelförmigen Partikel Daten permanent aufgezeichnet werden derart, dass ausgewählte örtliche Regionen gebildet werden, in welchen die nadelförmigen Partikel in einer vorbestimmten Richtung ausgerichtet sind, wobei die nicht nadelförmigen Magnetpartikel nicht derart ausgerichtet sind und in der Lage sind, Daten löschbar aufzuzeichnen.

2. Magnetaufzeichnungsträger nach Anspruch 1, wobei die die weitere Koerzitivkraft aufweisenden nicht nadelförmigen Magnetpartikel Plättchen sind.

3. Magnetaufzeichnungsträger nach einem der vorstehenden Ansprüche, wobei das Verhältnis in Volumenprozent der Partikel mit der ersten Koerzitivkraft zu Volumenprozent der Partikel mit der weiteren Koerzitivkraft zwischen 34:66 und 55:45 liegt.

4. Magnetaufzeichnungsträger nach einem der vorstehenden Ansprüche, wobei die Partikel mit der weiteren Koerzitivkraft eine oder mehrere aus der Gruppe von Materialien umfassen, welche Bariumferrit, Strontiumferrit, Platin-Kobalt und Silmanol beinhaltet.

5. Magnetaufzeichnungsträger nach einem der vorstehenden Ansprüche, wobei die Schicht von einem flexiblen Substrat getragen wird.

6. Wertdokument, welches einen Magnetaufzeichnungsträger nach einem der vorstehenden Ansprüche trägt.

7. Verfahren zur Herstellung eines Magnetaufzeichnungsträgers mit folgenden Schritten:
a) Anfertigen eines Schlamms mit nadelförmigen Magnetpartikeln mit einer ersten Koerzitivkraft und nicht nadelförmigen Magnetpartikeln mit einer weiteren Koerzitivkraft, welche höher als die erste Koerzitivkraft ist,
b) Aufbringen des Schlamms auf ein flexibles Substrat zur Ausbildung einer Schicht,
c) Ausrichten aller Magnetpartikel,
d) Ausrichten nur der nadelförmigen Magnetpartikel in örtlichen Regionen der Schicht in einer bestimmten Richtung, sowie
e) Verfestigen der Schicht.

8. Verfahren zum Herstellen eines Magnetaufzeichnungsträgers mit folgenden Schritten:
a) Anfertigen eines Schlamms mit nadelförmigen Magnetpartikeln, die eine erste Koerzitivkraft aufweisen,
b) Hinzufügen nicht nadelförmiger Magnetpartikel, welche eine weitere Koerzitivkraft aufweisen, die höher ist als die erste Koerzitivkraft, zu dem Schlamm,
c) Aufbringen des Schlamms auf ein flexibles Substrat zur Ausbildung einer Schicht,
d) Ausrichten aller Magnetpartikel,
e) Ausrichten nur der nadelförmigen Magnetpartikel in örtlichen Regionen der Schicht in einer vorbestimmten Richtung, sowie
f) Verfestigen der Schicht.

9. Verfahren zum Herstellen eines Magnetaufzeichnungsträgers nach Anspruch 7 oder Anspruch 8, wobei das Verhältnis in Volumenprozent der Partikel mit der ersten Koerzitivkraft zu Volumenprozent der Partikel mit der weiteren Koerzitivkraft in dem Schlamm zwischen 34:66 und 55:45 beträgt.

## Revendications

1. Support d'enregistrement magnétique comprenant une couche d'un matériau comprenant des particules magnétiques aciculaires alignées de manière permanente ayant une première coercivité, la couche comprenant des particules magnétiques non-aciculaires ayant une autre coercivité supérieure à la première, **caractérisé en ce que** les données sont enregistrées de manière permanente au moyen de l'alignement des particules aciculaires pour former des zones espacées sélectionnées dans lesquelles les particules aciculaires sont alignées en suivant une direction prédéterminée, les particules magnétiques non-aciculaires n'étant pas alignées de cette façon et étant capables d'enregistrer des données de manière effaçable.

2. Support d'enregistrement magnétique selon la revendication 1, dans lequel les particules magnétiques non-aciculaires ayant ladite autre coercivité sont des plaquettes.

3. Support d'enregistrement magnétique selon l'une quelconque des revendications précédentes, dans lequel le taux du pourcentage du volume des particules ayant ladite première coercivité par rapport au pourcentage du volume des particules ayant ladite autre coercivité se situe entre 34:66 et 55:45.

4. Support d'enregistrement magnétique selon l'une quelconque des revendications précédentes, dans lequel les particules ayant ladite autre coercivité comprennent un ou plusieurs matériaux dans le groupe incluant la ferrite de baryum, la ferrite de strontium, le Platine-Cobalt et le Silmanal.

5. Support d'enregistrement magnétique selon l'une quelconque des revendications précédentes, dans lequel la couche est portée par un substrat flexible.

6. Document de valeur portant un support d'enregistrement magnétique selon l'une quelconque des revendications précédentes.

7. Procédé de fabrication d'un support d'enregistrement magnétique, comprenant les étapes consistant à :
a) préparer une suspension comprenant des particules magnétiques aciculaires ayant une première coercivité et des particules magnétiques non-aciculaires ayant une autre coercivité supérieure à la première coercivité,
b) enduire la suspension sur un substrat flexible pour former une couche,
c) aligner toutes les particules magnétiques,
d) aligner seulement les particules magnétiques aciculaires dans des zones espacées de ladite couche en suivant une direction prédéterminée, et
e) solidifier ladite couche.

8. Procédé de fabrication d'un support d'enregistrement magnétique comprenant les étapes consistant à :
a) préparer une suspension comprenant des particules magnétiques aciculaires ayant une première coercivité,
b) ajouter à la suspension des particules magnétiques non-aciculaires ayant une autre coercivité supérieure à la première coercivité,
c) enduire la suspension sur un substrat flexible pour former une couche,
d) aligner toutes les particules magnétiques,
e) aligner seulement les particules magnétiques aciculaires dans des zones espacées de ladite couche en suivant une direction prédéterminée, et
f) solidifier ladite couche.

9. Procédé de fabrication d'un support d'enregistrement magnétique selon la revendication 7 ou 8, dans lequel le pourcentage du volume des particules ayant ladite première coercivité et le pourcentage du volume des particules ayant ladite autre coercivité dans la suspension se situent à un taux entre 34:66 et 55:45.
